# EUROPÄISCHE PATENTANMELDUNG

(11) **EP 4 815 237 A1**
(43) Veröffentlichungstag der Anmeldung: **30.09.2026**
(21) Anmeldenummer: 25166931.3
(22) Anmeldetag: 28.03.2025
(51) Int. Cl.: H02J 3/00, H02J 13/00

(54) **VERFAHREN UND COMPUTERPROGRAMMPRODUKT ZUR ERMITTLUNG VON NETZENGPÄSSEN FÜR EIN STROMNETZ**

(71) Anmelder: Siemens Aktiengesellschaft, 80333 München (DE)
(72) Erfinder: Metzger, Michael, 85570 Markt Schwaben (DE); Stursberg, Paul, 80469 München (DE); Voss De Gregorio, Luiza Silveira, 80799 München (DE)
(74) Vertreter: Siemens Patent Attorneys

(57) **Zusammenfassung**

Die Erfindung betrifft ein Verfahren (100) zur Ermittlung von Netzengpässen für ein Stromnetz, wobei das Stromnetz mehrere Komponenten, insbesondere Leitungen, Schalter und/oder Anlagen umfasst. Das Verfahren ist gekennzeichnet durch folgende Schritte:
- (102) Bereitstellen mehrerer Netztopologien für das Stromnetz;
- (104) Durchführen einer Überlastberechnung für jede der Netztopologien;
- (106) Ermittlung einer Überlastwahrscheinlichkeit für jede der Komponenten mittels der Netztopologien und der Überlastberechnung; wobei
- (108) die Netzengpassermittlung durch ein Ermitteln wenigstens einer der Komponenten erfolgt, welche, wenn die Komponente als überlastfrei angenommen wird, zur größten Anzahl von überlastfreien Netztopologien führt.

Weiterhin betrifft die Erfindung ein Computerprogrammprodukt.

## Beschreibung

Die vorliegende Erfindung bezieht sich auf die Ermittlung von Netzengpässen für Stromnetze, und insbesondere auf ein Verfahren zur Ermittlung von Netzengpässen durch Analyse mehrerer Netztopologien und Überlastwahrscheinlichkeiten gemäß Anspruch 1 und ein Computerprogrammprodukt gemäß Anspruch 15.

Im Bereich der Stromverteilung spielt das Management von Netzengpässen eine entscheidende Rolle bei der Sicherstellung einer effizienten und zuverlässigen Stromversorgung. Stromnetze, insbesondere in Verteilnetze, stehen aufgrund der wachsenden Integration von dezentralen Energieressourcen (DERs), wie beispielsweise Photovoltaikanlagen, Ladestationen für Elektrofahrzeuge und Wärmepumpen vor zunehmenden technischen Herausforderungen. Diese Entwicklungen führen zu neuen Komplexitäten bezüglich einer Aufrechterhaltung der Netzstabilität und einer Verhinderung von Überlaste.

Verteilnetzbetreiber (VNB) sind typischerweise für eine proaktive Ausbauplanung in Mittelspannungsnetzen sowie Niederspannungsnetzen verantwortlich, und müssen die genannten technischen Herausforderungen lösen. Zur Netzengpasserkennung beziehungsweise Netzengpassermittlung können Netzbereiche ermittelt werden, die in zukünftigen Betriebsszenarien wahrscheinlich die größten Engpässe erfahren werden. Diese Identifikation kann anschließend für eine Priorisierung der physischen Ausbauplanung oder die Implementierung aktiver Engpassmanagementmaßnahmen verwendet werden.

Typischerweise basiert die Netzausbauplanung in Verteilsystemen auf einer einzigen Netztopologie, die durch eine feste Schaltkonfiguration im Betrieb ermittelt wurde. Dieser Ansatz weist jedoch Nachteile auf, da sich die Standardschaltkonfiguration für ein Stromnetz im Laufe der Zeit, beispielsweise aufgrund von Wartungsarbeiten oder einem Hinzufügen neuer Verbraucher, ändern kann. Die hohe Anzahl von Schaltern in Mittelspannungsnetzen oder Niederspannungsnetzen führt zu zahlreichen möglichen Konfigurationen, wodurch sich mehrere potenzielle Betriebstopologien für ein Stromnetz ausbilden.

Darüber hinaus sind Änderungen in Schaltkonfigurationen typischerweise schlecht dokumentiert. Dadurch ist es schwierig, die aktuelle Netztopologie mit Sicherheit zu bestimmen. Diese Unsicherheit erschwert den Prozess der Bewertung von Ausbauoptionen gegenüber einer Basistopologie. Somit besteht ein wachsender Bedarf an robusteren Planungsmethoden, die mehrere alternative Netztopologien berücksichtigen können.

Durch eine mögliche Berücksichtigung verschiedener Netztopologien während der Planungsphasen können VNB identifizieren, welche Engpässe durch Rekonfiguration lösbar sind und welche für den Netzausbau oder weitere Netzeingriffe priorisiert werden müssen. Dadurch wird sichergestellt, dass Ausbaumaßnahmen Engpässe nicht lediglich für eine einzelne Planungstopologie beziehungsweise Netztopologie lösen, sondern ebenfalls für weitere Schaltkonfigurationen/Netztopologien, die zukünftig möglicherweise erforderlich werden. Es ist somit erforderlich, verschiedene mögliche Betriebstopologien von Stromnetzen beim Netzausbau sowie Engpassmanagement zu berücksichtigen.

Der vorliegenden Erfindung liegt die Aufgabe zugrunde, ein verbessertes Verfahren zur Ermittlung beziehungsweise zur Erkennung von Netzengpässen für ein Stromnetz bereitzustellen, welches insbesondere mehrere mögliche Netztopologien des Stromnetzes berücksichtigt.

Die Aufgabe wird durch ein Verfahren mit den Merkmalen des unabhängigen Patentanspruches 1 sowie durch ein Computerprogrammprodukt mit den Merkmalen des unabhängigen Patentanspruches 15 gelöst. In den abhängigen Patentansprüchen sind vorteilhafte Ausgestaltungen und Weiterbildungen der Erfindung angegeben.

Das erfindungsgemäße Verfahren zur Netzengpassermittlung (Ermittlung eines oder mehrerer Netzengpässe) für ein Stromnetz, wobei das Stromnetz mehrere Komponenten, insbesondere Leitungen, Schalter und/oder Anlagen umfasst, ist wenigstens durch folgende Schritte gekennzeichnet:
- Bereitstellen mehrerer Netztopologien für das Stromnetz;
- Durchführen einer Überlastberechnung für jede der Netztopologien;
- Ermittlung einer Überlastwahrscheinlichkeit für jede der Komponenten und für jede Netztopologie mittels der Netztopologien und der Überlastberechnung; wobei
- die Netzengpassermittlung durch ein Ermitteln wenigstens einer der Komponenten erfolgt, welche, wenn die Komponente als überlastfrei angenommen wird, zur größten Anzahl von überlastfreien Netztopologien führt.

Ein Netzengpass kann sich auf einen Zustand des Stromnetzes beziehen, bei dem die wenigstens eine seiner Komponenten überlastet ist, das heißt wenigstens einen netzspezifischen und/oder komponentenspezifischen Grenzwert verletzt. Beispielsweise kann dies eine Spannungsbandverletzung und/oder eine Verletzung eines Leistungsgrenzwertes sein. Eine Komponente ist überlastfrei, wenn diese keine Überlast aufweist.

Eine Netztopologie kann sich auf die physische und elektrische Konfiguration eines Stromverteilungsnetzes, einschließlich der Anordnung von Leitungen, Schaltern, Transformatoren und/oder weiterer Komponenten beziehen. Vorliegend werden mehrere Netztopologien berücksichtigt, um verschiedene mögliche Netzkonfigurationen zu berücksichtigen, die aufgrund von Schaltoperationen oder Netzrekonfigurationen entstehen können.

Mittels einer Überlastberechnung wird für eine jeweilige Netztopologie ermittelt, welche Komponenten des Stromnetzes eine Überlast aufweisen. Diese Überlastberechnung kann insbesondere eine Lastflussrechnung sein.

Eine Überlastwahrscheinlichkeit ist ein statistisches Maß, welches die Wahrscheinlichkeit darstellt, mit der eine Komponente in einer Netztopologien eine Überlast aufweist. Die Überlastwahrscheinlichkeit wird basierend auf dem Ergebnis der Überlastberechnungen ermittelt, die für jede der Netztopologien durchgeführt wird. Eine aggregierte Überlastwahrscheinlichkeit berücksichtigt die Überlastwahrscheinlichkeiten über die Netztopologien hinweg. Diese kann beispielsweise durch einen Durchschnitt oder gewichteten Durchschnitt der einzelnen Überlastwahrscheinlichkeiten über die Netztopologien ermittelt werden.

Eine Komponente kann ein Element des Stromnetzes und/oder der zugehörigen elektrischen Infrastruktur sein. Eine Komponente kann als Leitung, insbesondere als Übertragungs- und/oder Verteilungsleitung, als Schalter zur Netzrekonfiguration und/oder als Anlage, insbesondere als Transformator, als Ortsnetzstation, als Umspannwerk und/oder als dezentrale Energieressource, ausgebildet sein.

Die Erfindung weist insbesondere einen oder mehrere der in den folgenden genannten Vorteilen auf:
Berücksichtigung mehrerer Netztopologien: Im Gegensatz zu bekannten Verfahren, die sich auf eine einzige Netztopologie stützen, berücksichtigt die Erfindung mehrere Netztopologien. Dieser Ansatz trägt der dynamischen Natur moderner Stromnetze Rechnung, bei denen sich Schaltkonfigurationen aufgrund von Wartungsarbeiten, neuen Verbraucheranschlüssen und/oder betrieblichen Anforderungen ändern können. Durch die Analyse verschiedener möglicher Netzkonfigurationen liefert die Methode eine robustere und realistischere Ermittlung potenzieller Engpassprobleme.

Probabilistische Engpassermittlung: Durch die Berechnung der Überlastwahrscheinlichkeit können Netzplaner Netzeingriffe auf der Grundlage statistischer Evidenzen priorisieren, und müssen sich nicht auf Worst-Case-Szenarien oder Einzelpunktschätzungen verlassen.

Identifizierung kritischer Komponenten: Die Methode ermittelt, welche Komponenten, wenn sie als überlastfrei angenommen werden, zur größten Anzahl überlastfreier Netztopologien führen. Dadurch werden sinnbildlich die bezüglich der Engpassminderung einflussreichsten Komponenten identifiziert. Dadurch können Netzbetreiber Ausbaustrategien optimieren und eine effektivere Engpassentlastung durch gezielte Netzeingriffe erreichen.

Verbesserte Planung für zukünftige Netzkonfigurationen: Mit der zunehmenden Integration dezentraler Energieressourcen wird die Berücksichtigung mehrerer Netztopologien immer wichtiger. Die Erfindung ermöglicht es bei einer Netzplanung, die Auswirkungen potenzieller zukünftiger Netzkonfigurationen zu bewerten und sicherzustellen, dass Ausbaumaßnahmen und Engpassmanagementstrategien über verschiedene Szenarien hinweg wirksam bleiben und ausreichend sind.

Verbesserte Zuverlässigkeit und Resilienz: Durch die Berücksichtigung mehrerer Netztopologien können Engpassprobleme identifizieren werden, die bei verschiedenen Netzkonfigurationen auftreten können. Dadurch erhöht sich die Zuverlässigkeit und die Resilienz des Stromnetzes, indem potenzielle Engpässe in verschiedenen Betriebszuständen berücksichtigt werden.

Effiziente Ressourcenallokation: Durch die Ermittlung der Komponente, welche im Sinne der vorliegenden Erfindung die größte Auswirkung auf überlastfreie Netztopologien aufweist, wird eine effizientere Netzsteuerung beziehungsweise Netzregelung sowie ein verbessertes Netzengpassmanagement ermöglicht. Netzbetreiber können die ermittelte Komponente beziehungsweise die ermittelten Komponenten bei einem Netzausbau priorisieren, wodurch Gesamtkosten reduziert werden können und gleichzeitig die Effektivität von Engpassmanagementmaßnahmen erhöht wird.

Anpassungsfähigkeit an komplexe Netzstrukturen: Moderne Stromnetze, insbesondere auf Verteilungsebene, werden aufgrund der Integration von DERs, Smart-Grid-Technologien und flexiblen Lasten zunehmend komplexer. Das erfindungsgemäße Verfahren ist geeignet, diese Komplexität zu bewältigen, indem mehrere Netztopologien analysiert werden, wodurch ein ganzheitlicher Überblick über Engpassrisiken bereitgestellt wird.

Unterstützung für aktives Netzmanagement: Mit dem Übergang der Stromnetze zu aktiveren Managementansätzen wird die Fähigkeit, Engpässe schnell über mehrere Konfigurationen hinweg zu bewerten, immer wichtiger. Die Erfindung bietet eine Grundlage für die Entwicklung dynamischer Engpassmanagementstrategien, die sich an verändernde Netzbedingungen anpassen können.

Verbesserte Entscheidungsfindung für den Netzausbau: Indem die Erfindung Einblicke darüber bereitstellt, welche Komponenten die größten Auswirkungen auf die Reduzierung von Engpässen über mehrere Netztopologien hinweg haben, unterstützt das Verfahren eine fundiertere Entscheidungsfindung bei der Netzausbauplanung. Dies kann zu kosteneffektiveren und zukunftssicheren Infrastrukturinvestitionen führen.

Kompatibilität mit bestehenden Planungsprozessen: Die Erfindung kann in bestehende Netzplanungsabläufe integriert werden und verbessert aktuelle Praktiken, ohne eine vollständige Überarbeitung etablierter Verfahren zu erfordern. Diese Kompatibilität erleichtert die Einführung und Implementierung durch Verteilnetzbetreiber.

Das erfindungsgemäße Computerprogrammprodukt ist dadurch gekennzeichnet, dass diese Anweisungen umfasst, die, wenn sie von einer Recheneinheit, insbesondere einem Computer, ausgeführt werden, diese veranlassen, ein Verfahren und/oder Schritte des Verfahrens gemäß einem der Ansprüche 1 bis 14 auszuführen.

Es ergeben sich zum erfindungsgemäßen Verfahren zur Ermittlung der Netztopologie gleichartige, gleichwertige und gleichwirkende Vorteile.

Gemäß einer bevorzugten Ausgestaltung der Erfindung erfolgt die Ermittlung der wenigstens einen Komponente mittels eines Optimierungsverfahrens.

Dadurch wird eine effiziente Identifizierung (Ermittlung) der kritischen Komponenten ermöglicht, die im Sinne der Erfindung den größten Einfluss auf die Reduzierung von Netzengpässen aufweisen. Durch die Verwendung von Optimierungsverfahren kann eine große Anzahl potenzieller Lösungen bewertet werden und die optimale Gruppe von Komponenten ermittelt werden, die für die Engpassminderung priorisiert werden sollten. Dieser Ansatz ist besonders vorteilhaft für komplexe Stromnetze, die eine Vielzahl von Komponenten und/oder Netztopologien aufweisen.

Gemäß einer bevorzugten Ausgestaltung der Erfindung wird bei dem Optimierungsverfahren eine Zielfunktion maximiert, wobei die Zielfunktion die Anzahl der überlastfreien Netztopologien modelliert.

In analogerweise kann eine Zielfunktion verwendet werden, die minimiert wird. Die Zielfunktion bildet ein Maß für die Anzahl der überlastfreien Netztopologien aus. Diese ist von den jeweiligen Komponenten abhängig, sodass durch die Maximierung der Zielfunktion beziehungsweise deren Werts die Komponenten ermittelt werden, welche zu maximalen Anzahlen von überlastfreien Netztopologien führen. Dadurch kann wenigstens eine Komponente oder eine gegebenenfalls festgelegte Anzahl von Komponenten ermittelt werden, die, wenn als überlastfrei angenommen, was beispielsweise durch einen Ausbau der jeweiligen Komponente ermöglicht wird, zur größten Anzahl von überlastfreien Netztopologien führt.

Gemäß einer bevorzugten Ausgestaltung der Erfindung werden die Netzengpässe dadurch ermittelt, dass
- in einem ersten Teilschritt für jede der Komponenten die Anzahl der überlastfreien Netztopologien ermittelt wird, wobei die jeweilige Komponente als überlastfrei angenommen wird;
- in einem zweiten Teilschritt eine der Komponenten ermittelt wird, die zur größten Anzahl überlastfreier Netztopologien unter den Komponenten führt oder eine größte aggregierte Überlastwahrscheinlichkeit aufweist; und
- der erste und zweite Teilschritt wiederholt werden, wobei bei jeder Wiederholung die im vorhergehenden zweiten Teilschritt ermittelte Komponente nicht berücksichtigt wird.

Dieser iterative Ansatz bietet eine systematische Methode zur Identifizierung und Priorisierung von Komponenten, die den größten Einfluss auf die Reduzierung von Netzengpässen haben. Durch die sequenzielle Ermittlung der Komponente, die zur größten Anzahl überlastfreier Netztopologien führt oder die größte aggregierte Überlastwahrscheinlichkeit aufweist, stellt die Methode sicher, dass jeder Schritt zu einer möglichst optimalen Verbesserung der Netzleistung führt. Dadurch wird ein effizientes Verfahren bereitgestellt, welches zu einer ausreichend genauen Ermittlung der Komponenten führt.

Gemäß einer bevorzugten Ausgestaltung der Erfindung werden die Teilschritte wiederholt, bis eine festgelegte Anzahl von Komponenten ermittelt ist oder keine Überlasten mehr vorliegen.

Diese Abbruchbedingung bietet Flexibilität bei der Anwendung der Methode und ermöglicht eine Anpassung an spezifische Planungsbedürfnisse oder Ressourcenbeschränkungen. Durch die Festlegung einer ermittelten Anzahl von Komponenten können sich Netzbetreiber auf eine festgelegte Anzahl prioritärer Netzeingriffe konzentrieren. Alternativ stellt die Fortsetzung bis zum Verschwinden aller Überlasten eine umfassende Lösung für Netzengpässe sicher, möglicherweise jedoch zu höheren Kosten oder mit größerer Komplexität. Dieser Ansatz ermöglicht eine Balance zwischen Engpassminderung und praktischen Umsetzungsbeschränkungen.

Gemäß einer bevorzugten Ausgestaltung der Erfindung werden die ermittelten Komponenten mittels einer sortierten Liste bereitgestellt, wobei die Anordnung der Komponenten innerhalb der Liste mit einer Priorisierung bezüglich Netzeingriffen assoziiert ist.

Die Ausgabe der Ergebnisse als sortierte Liste bietet eine klare und umsetzbare Ausgabe für Netzplaner und -betreiber. Die priorisierte Liste ermöglicht eine effiziente Ressourcenallokation, indem sie sich auf die Komponenten konzentriert, die den größten Einfluss auf die Reduzierung von Engpässen aufweisen. Dieser Ansatz erleichtert strategische Entscheidungen bei Netzausbau- und/oder Aufrüstungen der Komponenten.

Gemäß einer bevorzugten Ausgestaltung der Erfindung ist eine Netztopologie überlastfrei, wenn die Überlastwahrscheinlichkeit jeder der Komponenten einen Wert kleiner oder gleich einem Schwellenwert hat.

Die Definition einer überlastfreien Topologie basierend auf einem Wahrscheinlichkeitsschwellenwert bietet einen flexiblen und verbesserten Ansatz zur Engpassbewertung. Die Methode berücksichtigt, dass ein gewisses Maß an Überlastrisiko im praktischen Netzbetrieb akzeptabel sein kann und ermöglicht eine Balance zwischen Zuverlässigkeit und Kosteneffizienz. Der Schwellenwert kann basierend auf spezifischen Netzanforderungen oder Risikotoleranzniveaus festgelegt werden. Weiterhin kann die Überlastwahrscheinlichkeit lediglich die diskreten Werte Null oder Eins annehmen. Hierbei ist die Komponente für den Wert Null überlastfrei und für den Wert Eins gemäß der Überlastrechnung überlastet.

Gemäß einer bevorzugten Ausgestaltung der Erfindung werden bei der Ermittlung von Netzengpässen nur Komponenten berücksichtigt, die eine Überlastwahrscheinlichkeit größer als der Schwellenwert, insbesondere größer als Null, aufweisen.

Dieser Ansatz konzentriert die Analyse auf Komponenten, die am wahrscheinlichsten zu Netzengpässen beitragen. Durch den Ausschluss von Komponenten mit sehr niedrigen oder Überlastwahrscheinlichkeiten vom Wert Null wird die Komplexität reduziert und eine effizientere Nutzung der numerischen Rechenressourcen ermöglicht. Dies ist besonders vorteilhaft für großflächige Netzsysteme mit zahlreichen Komponenten.

Gemäß einer bevorzugten Ausgestaltung der Erfindung wird die Überlastwahrscheinlichkeit einer Komponente basierend auf der Anzahl der Netztopologien ermittelt, für die die jeweilige Komponente gemäß der jeweiligen Überlastberechnung eine Überlast aufweist.

Diese Methode zur Berechnung der Überlastwahrscheinlichkeit bietet ein einfaches und effizientes Maß für die Anfälligkeit einer Komponente für Engpässe über mehrere Netzkonfigurationen hinweg. Durch die Berücksichtigung des Anteils der Netztopologien, in denen eine Komponente eine Überlast aufweist, erfasst der Ansatz die Anfälligkeit der Komponente für Engpässe unter verschiedenen Betriebsbedingungen. Diese probabilistische Bewertung bietet eine genauere Sicht auf das Engpassrisiko im Vergleich zu deterministischen Methoden.

Gemäß einer bevorzugten Ausgestaltung der Erfindung wird die Überlastberechnung mittels einer Lastflussrechnung und/oder mittels einer Aggregation durchgeführt.

Die Verwendung von Lastflussrechnungen bietet eine vorteilhafte Ermittlung der Überlast einer Komponente unter einer Berücksichtigung des jeweiligen Netzzustands. Dieser Ansatz ermöglicht die Berücksichtigung der komplexen Wechselwirkungen zwischen verschiedenen Komponenten und die Auswirkungen von Lastflussverteilungen auf Engpässe. Die Verwendung von Aggregationsmethoden bietet Flexibilität bei der Handhabung großer Systeme oder Situationen, in denen detaillierte Simulationen zu rechenintensiv sind.

Gemäß einer bevorzugten Ausgestaltung der Erfindung werden mehrere Betriebstopologien des Stromnetzes als Netztopologien bereitgestellt, wobei die Betriebstopologien mittels verschiedener Stellungen von Schaltern des Stromnetzes gebildet werden.

Die Berücksichtigung mehrerer Betriebstopologien, die durch verschiedene Schalterstellungen gebildet werden, ermöglicht eine umfassende Analyse potenzieller Netzkonfigurationen. Dieser Ansatz berücksichtigt die Flexibilität, die moderne, komplexe Stromnetze aufweisen. Durch die Analyse verschiedener möglicher Schalterkonfigurationen liefert die Methode Einblicke darüber, wie Änderungen der Netztopologie Engpassmuster beeinflussen können.

Gemäß einer bevorzugten Ausgestaltung der Erfindung wird zur Ermittlung möglicher Betriebstopologien ein Markov-Chain-Monte-Carlo-Algorithmus verwendet.

Die Verwendung eines Markov-Chain-Monte-Carlo (MCMC)-Algorithmus zur Ermittlung möglicher Betriebstopologien bietet eine effiziente Methode zur Stichprobenentnahme aus dem Raum potenzieller Netzkonfigurationen. Dieser Ansatz ermöglicht die Ermittlung einer technisch repräsentativen Menge von Netztopologien, ohne dass eine erschöpfende Aufzählung erforderlich ist, die für große Stromnetze rechnerisch nicht durchführbar wäre. MCMC-Methoden sind für diese Aufgabe besonders gut geeignet, da sie komplexe, hochdimensionale Räume handhaben können und so eingestellt werden können, dass sie sich auf wahrscheinlichere, das heißt technisch relevantere Konfigurationen konzentrieren.

Gemäß einer bevorzugten Ausgestaltung der Erfindung sind die Komponenten als Leitungen, Schalter, Umspannwerke und/oder Ortsnetzstationen ausgebildet.

Dadurch wird eine ganzheitliche Analyse von Engpässen über verschiedene Ebenen und Elemente des Stromverteilungssystems hinweg ermöglicht. Durch die Einbeziehung von Leitungen, Schaltern, Umspannwerken und/oder Ortsnetzstationen kann die Methode Engpass-Hotspots und kritische Komponenten in der gesamten Netzhierarchie identifizieren. Dieser Ansatz stellt sicher, dass Engpassprobleme auf mehreren Ebenen, von einzelnen Leitungen bis hin zu großen Umspannwerken, adressiert werden.

Gemäß einer bevorzugten Ausgestaltung der Erfindung ist das Stromnetz als Mittelspannungs- oder Niederspannungsstromnetz ausgebildet.

Die Konzentration auf Mittel- und Niederspannungsstromnetze adressiert einen kritischen Bereich des Stromverteilungssystems, in dem Engpassprobleme zunehmend auftreten. Diese Spannungsebenen sind besonders von der Integration dezentraler Energieressourcen und sich ändernden Verbrauchsmustern betroffen. Durch die Anpassung der Methode an diese Netzsegmente liefert sie wertvolle Erkenntnisse für Verteilnetzbetreiber, die vor neuen technischen Herausforderungen im Netzmanagement stehen.

Weitere Vorteile, Merkmale und Einzelheiten der Erfindung ergeben sich aus den im Folgenden beschriebenen Ausführungsbeispielen sowie anhand der Zeichnungen. Dabei zeigen schematisch:
- Figur 1: ein Flussdiagramm für ein Verfahren zur Ermittlung von Netzengpässen für ein Stromnetz;
- Figur 2: eine Matrix zur Ermittlung von Netzengpässen in einem Stromnetz; und
- Figur 3: ein Stromnetz mit mehreren Komponenten, insbesondere Netzknoten und Leitungen.

Gleichartige, gleichwertige oder gleichwirkende Elemente können in der Figur mit denselben Bezugszeichen versehen sein.

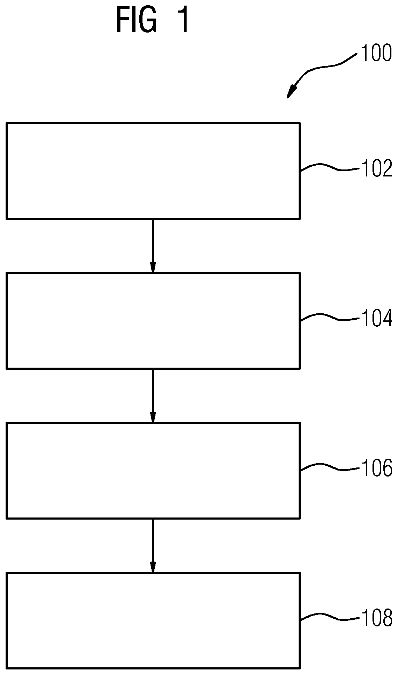

Die Figur 1 zeigt ein Flussdiagramm für ein Verfahren 100 zur Ermittlung von Netzengpässen für ein Stromnetz. Das Verfahren 100 umfasst mehrere Schritte 102, 104, ..., 108, die mehrere Netztopologien analysieren, um Engpass-Hotspots zu identifizieren und Komponenten für potenzielle Netzeingriffe zu priorisieren. Hierzu werden die jeweiligen Komponenten mit dem größten Einfluss auf überlastfreie Netztopologien ermittelt.

Im Schritt 102 werden mehrere Netztopologien für das Stromnetz bereitgestellt. Dadurch werden verschiedene mögliche Netzkonfigurationen, die sich beispielsweise für verschiedene Schalterstellungen ausbilden, berücksichtigt. Diese Netztopologien können somit verschiedene Schaltzustände, geplante Erweiterungen und/oder potenzielle zukünftige Szenarien darstellen. Die Generierung der Netztopologien könnte durch verschiedene Mittel erreicht werden, wie beispielsweise eine historische Datenanalyse, durch Expertenwissen und/oder algorithmische Generierung, insbesondere mittels eines Markov-Chain-Monte-Carlo-Algorithmus.

Der Schritt 104 umfasst die Durchführung einer Überlastberechnung für jede der in Schritt 102 bereitgestellten Netztopologien. Diese Berechnung umfasst typischerweise die Durchführung von Lastflusssimulationen für jede Netztopologie unter verschiedenen Last- und Erzeugungsszenarien. Die Simulationen bestimmen, ob Komponenten des Stromnetzes, beispielsweise Leitungen, Transformatoren, Umspannwerke, und/oder Ortsnetzstationen unter den gegebenen Bedingungen ihre Nennkapazitäten überschreiten und/oder zu einer Spannungsbandverletzung führen.

Im Schritt 106 wird eine Überlastwahrscheinlichkeit für jede Komponente und für jede Netztopologie im Stromnetz ermittelt. Die Überlastwahrscheinlichkeit wird basierend auf den Ergebnissen der Überlastberechnungen für alle analysierten Netztopologien berechnet. Die Überlastwahrscheinlichkeit bietet ein quantitatives Maß dafür, wie wahrscheinlich eine Komponente über verschiedene Netzkonfigurationen hinweg Engpässe erfährt. Dieser probabilistische Ansatz bietet ein verbessertes Verständnis von Engpassrisiken im Vergleich zu bekannten deterministischen Methoden.

Im Schritt 108 werden die Netzengpässe durch eine Identifizierung wenigstens einer Komponente ermittelt. Hierzu wird ermittelt, welche Komponente, wenn diese als überlastfrei angenommen wird, zur größten Anzahl überlastfreier Netztopologien führt. Dieser Schritt ist vorteilhaft für eine Priorisierung von Netzeingriffe im Stromnetz. Dadurch wird vorteilhafterweise die Komponente ermittelt, die den größten technischen Einfluss auf die Verhinderung von Netzengpässen hat. Diese ist vorteilhafterweise bezüglich Steuerungen/Regelungen und/oder Ausbaumaßnahmen zu priorisieren.

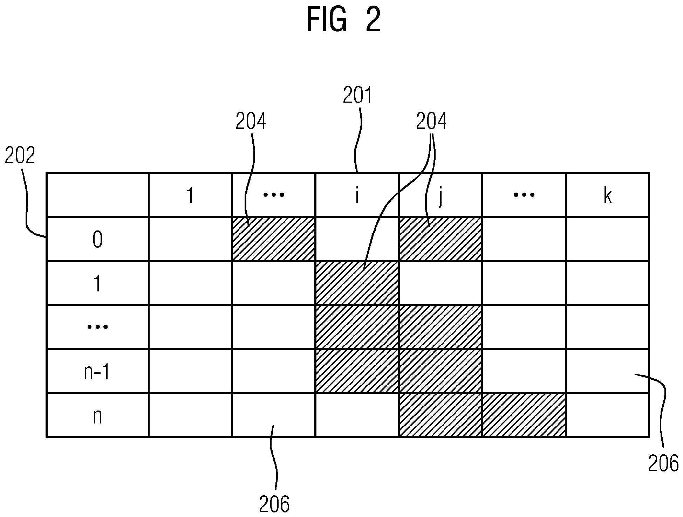

Die Figur 2 zeigt eine Matrix zur Ermittlung von Netzengpässen in einem Stromnetz und verdeutlicht das unter Figur 1 beschriebene Verfahren.

Die Spalten 201 der dargestellten Matrix entsprechen verschiedenen Komponenten des Stromnetzes. Die Komponenten können insbesondere als Leitungen, Schalter, Transformatoren, Umspannwerke und/oder Ortsnetzstationen ausgebildet sein. Die Zeilen 202 korrespondieren zu mehreren möglichen Netztopologien des Stromnetzes. Die Netztopologien repräsentieren verschiedene mögliche Konfigurationen des Stromnetzes und berücksichtigen insbesondere verschiedene Schaltzustände, geplante Erweiterungen und/oder potenzielle zukünftige Szenarien.

Die dargestellte Matrix zeigt überlastfreie Komponenten 206 (ohne Schraffur) und überlastete Komponenten (mit Schraffur) 204. Aus Gründen der Übersicht sind lediglich exemplarische Komponenten mit den Bezugszeichen 204 beziehungsweise 206 gekennzeichnet. Hierbei ist eine der Komponente überlastfrei, wenn diese für die jeweilige Netztopologie (Zeilen 202) keine Überlast gemäß der jeweiligen Überlastberechnung aufweist. Analog ist eine der Komponenten überlastet, wenn diese für die jeweilige Netztopologie (Zeilen 202) eine Überlast gemäß der jeweiligen Überlastberechnung aufweist. An der dargestellten Matrix ist somit zu erkennen, welche der Komponenten bei welcher Netztopologie eine Überlast (Schraffur) und somit einen Netzengpass aufweist. Eine Netztopologie weist somit einen Netzengpass auf, wenn eine oder mehrere der Komponenten für die jeweilige Netztopologie überlastet sind. Eine überlastfreie Netztopologie umfasst lediglich überlastfreie Komponenten, das heißt in der jeweiligen Netztopologie sind alle Komponenten überlastfrei.

Die dargestellte Matrix ermöglicht über mehrere Netztopologien hinweg eine Darstellung von Engpassmustern. Dadurch kann eine Komponente ermittelt werden, die den größten Einfluss auf Netzengpässe hat, beziehungsweise die, wenn überlastfrei angenommen wird, zur größten Anzahl von überlastfreien Netztopologien führt. Die aggregierte Überlastwahrscheinlichkeit einer Komponente kann durch den Anteil der Netztopologien, in denen die Komponente eine Überlast aufweist, ermittelt werden.

Die Matrix verdeutlicht, dass beispielsweise ein Ausbau und/oder eine Aufrüstung der Komponente j, sodass diese in allen Netztopologien überlastfrei ist, zu keiner überlastfreien Netztopologie führt, da weiterhin andere Komponenten überlastet sind. Ein Ausbau und/oder eine Aufrüstung der Komponente i, sodass diese überlastfrei ist beziehungsweise als überlastfrei angenommen werden kann, führt wenigstens zu einer überlastfreien Netztopologie, nämlich die Netztopologie 1 wäre dann überlastfrei. Somit sollte gemäß der exemplarischen Matrix der Ausbau und/oder die Aufrüstung der Komponente i priorisiert werden.

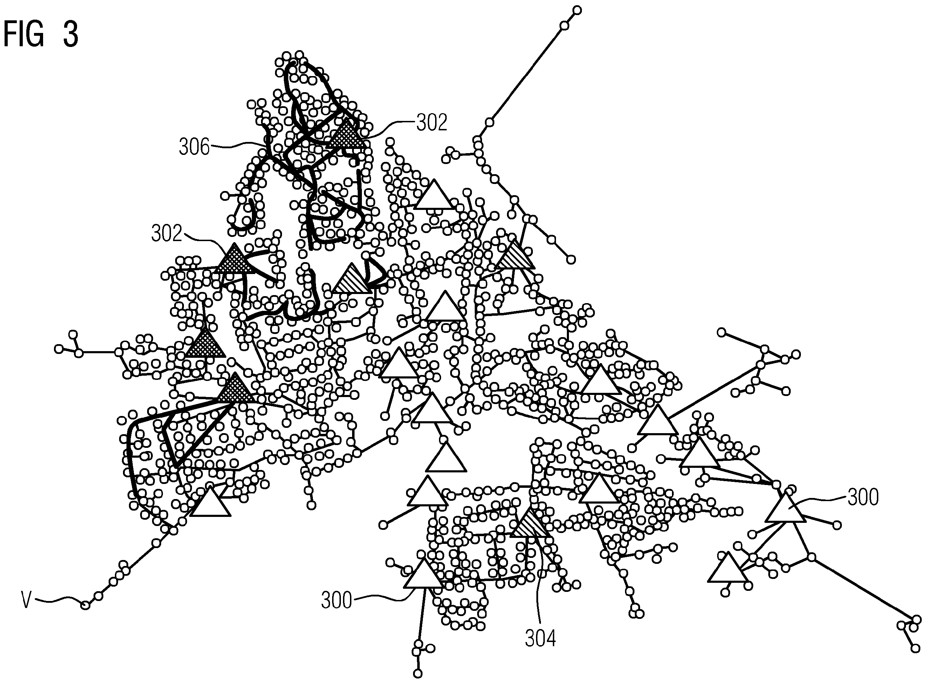

Die Figur 3 zeigt ein Netzwerkdiagramm 300, das ein Mittelspannungsnetz und/oder Niederspannungsnetz mit mehreren miteinander verbundenen Komponenten, Netzknoten und Zweigen, darstellt.

Die Figur bietet eine detailliertere Ansicht davon, wie die Engpassanalysemethode auf eine spezifische Netztopologie angewendet werden kann.

Das Stromnetz umfasst mehreren Wurzelbusse 300, 302, 304. Vorliegend sind exemplarisch die Wurzelbusse 300 überlastfrei und die Wurzelbusse 302 überlastet. Typischerweise werden die Wurzelbusse 300, 302, 304 durch Ortsnetzstationen, Umspannwerke und/oder Transformatoren des Stromnetzes ausgebildet. Wenigstens eine überlastete Leitung des Stromnetzes ist mit dem Bezugszeichen 306 gekennzeichnet. Exemplarisch ist ein weiterer Wurzelbus 306 in der Figur 3 gekennzeichnet, der eine Überlastwahrscheinlichkeit von etwa 50 Prozent aufweist.

Die Überlastwahrscheinlichkeiten werden mittels der Überlastberechnungen und den Netztopologien ermittelt. Hierzu wird der Anteil der Netztopologien bestimmt, für welche die jeweilige Komponente gemäß der Überlastrechnung eine Überlast aufweist. Somit weist beispielsweise der Wurzelbus 306 in 50 Prozent der Netztopologien eine überlast auf. In den weiteren 50 Prozent der Netztopologien ist der Wurzelbus 306 überlastfrei. Die Überlast kann bevorzugt mittels einer Lastflussrechnung ermittelt werden. Sollte die Lastflussrechnung numerisch nicht konvergieren, so kann das Stromnetz in Teilnetze unterteilt werden, für welche die Lastflussrechnungen dann konvergent durchgeführt werden kann.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 100: Verfahren
- 102: Schritt
- 104: Schritt
- 106: Schritt
- 108: Schritt
- 201: Spalten (Komponente)
- 202: Zeilen (Netztopologien)
- 204: überlastete Komponente
- 206: überlastfreie Komponente
- 300: Stromnetz
- 300: überlastfreier Wurzelbus
- 302: überlasteter Wurzelbus
- 304: Wurzelbus
- 304: Wurzelbus
- 306: überlastete Leitung

## Patentansprüche

1. Verfahren (100) zur Netzengpassermittlung für ein Stromnetz, wobei das Stromnetz mehrere Komponenten, insbesondere Leitungen, Schalter und/oder Anlagen umfasst, **gekennzeichnet durch** folgende Schritte:
- (102) Bereitstellen mehrerer Netztopologien für das Stromnetz;
- (104) Durchführen einer Überlastberechnung für jede der Netztopologien;
- (106) Ermittlung einer Überlastwahrscheinlichkeit für jede der Komponenten und für jede Netztopologie mittels der Netztopologien und der Überlastberechnung; wobei
- (108) die Netzengpassermittlung durch ein Ermitteln wenigstens einer der Komponenten erfolgt, welche, wenn die Komponente als überlastfrei angenommen wird, zur größten Anzahl von überlastfreien Netztopologien führt.

2. Verfahren (100) gemäß Anspruch 1, **dadurch gekennzeichnet, dass** die Ermittlung der wenigstens einen Komponente mittels eines Optimierungsverfahrens erfolgt.

3. Verfahren (100) gemäß Anspruch 2, **dadurch gekennzeichnet, dass** bei dem Optimierungsverfahren eine Zielfunktion maximiert wird, wobei die Zielfunktion die Anzahl der überlastfreien Netztopologien modelliert.

4. Verfahren (100) gemäß Anspruch 1, **dadurch gekennzeichnet, dass** die Netzengpässe dadurch ermittelt werden, dass
- in einem ersten Teilschritt für jede der Komponenten die Anzahl der überlastfreien Netztopologien ermittelt wird, wobei die jeweilige Komponente als überlastfrei angenommen wird;
- in einem zweiten Teilschritt eine der Komponenten ermittelt wird, die zur größten Anzahl überlastfreier Netztopologien unter den Komponenten führt oder eine größte aggregierte Überlastwahrscheinlichkeit aufweist; und
- der erste und zweite Teilschritt wiederholt werden, wobei bei jeder Wiederholung die im vorhergehenden zweiten Teilschritt ermittelte Komponente nicht berücksichtigt wird.

5. Verfahren (100) gemäß Anspruch 4, **dadurch gekennzeichnet, dass** die Teilschritte wiederholt werden, bis eine festgelegte Anzahl von Komponenten ermittelt ist oder keine Überlasten mehr vorliegen.

6. Verfahren (100) gemäß einem der vorhergehenden Ansprüche, **dadurch gekennzeichnet, dass** die ermittelten Komponenten mittels einer sortierten Liste bereitgestellt werden, wobei die Anordnung der Komponenten innerhalb der Liste mit einer Priorisierung bezüglich Netzeingriffen assoziiert ist.

7. Verfahren (100) gemäß einem der vorhergehenden Ansprüche, **dadurch gekennzeichnet, dass** eine Netztopologie überlastfrei ist, wenn die Überlastwahrscheinlichkeit jeder der Komponenten einen Wert kleiner oder gleich einem Schwellenwert aufweist.

8. Verfahren (100) gemäß Anspruch 7, **dadurch gekennzeichnet, dass** bei der Ermittlung von Netzengpässen lediglich Komponenten berücksichtigt werden, die eine Überlastwahrscheinlichkeit größer als der Schwellenwert, insbesondere größer als Null, aufweisen.

9. Verfahren (100) gemäß einem der vorhergehenden Ansprüche, **dadurch gekennzeichnet, dass** die aggregierte Überlastwahrscheinlichkeit gemäß Anspruch 4 einer Komponente basierend auf der Anzahl der Netztopologien ermittelt wird, für die die jeweilige Komponente gemäß der jeweiligen Überlastberechnung eine Überlast aufweist.

10. Verfahren (100) gemäß einem der vorhergehenden Ansprüche, **dadurch gekennzeichnet, dass** die Überlastberechnung mittels einer Lastflussrechnung und/oder mittels einer Aggregation durchgeführt wird.

11. Verfahren (100) gemäß einem der vorhergehenden Ansprüche, **dadurch gekennzeichnet, dass** mehrere Betriebstopologien des Stromnetzes als Netztopologien bereitgestellt werden, wobei die Betriebstopologien mittels verschiedener Stellungen von Schaltern des Stromnetzes gebildet werden.

12. Verfahren (100) gemäß Anspruch 11, **dadurch gekennzeichnet, dass** zur Ermittlung möglicher Betriebstopologien ein Markov-Chain-Monte-Carlo-Algorithmus verwendet wird.

13. Verfahren (100) gemäß einem der vorhergehenden Ansprüche, **dadurch gekennzeichnet, dass** die Komponenten als Leitungen, Schalter, Umspannwerke und/oder Ortsnetzstationen ausgebildet sind.

14. Verfahren (100) gemäß einem der vorhergehenden Ansprüche, **dadurch gekennzeichnet, dass** das Stromnetz als Mittelspannungs- oder Niederspannungsstromnetz ausgebildet ist.

15. Computerprogrammprodukt, umfassend Anweisungen, die, wenn sie von einer Recheneinheit, insbesondere einem Computer, ausgeführt werden, diese veranlassen, ein Verfahren und/oder Schritte des Verfahrens (100) nach einem der Ansprüche 1 bis 14 auszuführen.
